# EUROPÄISCHE PATENTSCHRIFT

(11) **EP 2 408 883 B1**
(45) Veröffentlichungstag und Bekanntmachung des Hinweises auf die Patenterteilung: **31.07.2013**
(21) Anmeldenummer: 10708918.7
(22) Anmeldetag: 03.03.2010
(51) Int. Cl.: C10M 105/38, C10M 105/40, C10M 169/04, B22F 1/00, C04B 35/632, C10N 20/00

(54) **SCHMIERMITTEL FÜR DIE PULVERMETALLURGIE**
LUBRICANT FOR POWDER METALLURGY
LUBRIFIANT POUR LA MÉTALLURGIE DES POUDRES

(30) Priorität: 16.03.2009 DE 102009013021
(43) Veröffentlichungstag der Anmeldung: 25.01.2012
(73) Patentinhaber: GKN Sinter Metals Holding GmbH, 42477 Radevormwald (DE)
(72) Erfinder: LINDENAU, René, 42477 Radevormwald (DE); WIMBERT, Lars, 58332 Schwelm (DE)
(74) Vertreter: Maxton, Alfred
(86) Internationale Anmeldenummer: PCT/EP2010/001302
(87) Internationale Veröffentlichungsnummer: WO 2010/105740

(56) Entgegenhaltungen:
- WO-A1-2008/028589
- US-A- 1 559 592
- US-A- 4 002 474
- US-A- 4 345 955
- US-A- 4 765 950

## Beschreibung

Die vorliegende Erfindung betrifft ein Schmiermittel für die Pulvermetallurgie als auch dessen Verwendung und eine sinterfähige Pulvermischung, welche das Schmiermittel umfasst.

Schmiermittel für die Pulvermetallurgie werden bei der Herstellung gesinterter Formteile vielfach eingesetzt. Derartige gesinterte Formteile finden vielfach Anwendung, insbesondere im Automobilbau, und dort insbesondere als Formteile im Motor als auch im Getriebe. Eine Schwierigkeit bei der Herstellung gesinterter Formteile besteht unter anderem darin, diese mit einer möglichst hohen Dichte herzustellen. Ein durch ein übliches pulvermetallurgisches Verfahren aus einem sinterfähigen Pulver ein- oder mehrschrittig gepresstes Formteil, allgemein als Grünkörper bezeichnet, wird dabei in einem zweiten Schritt in der Schutzatmosphäre gesintert, und nachfolgend unter Anwendung hoher Drücke in der Regel kalibriert, so dass sich ein festes und auch formgenaues Formteil ergibt.

Die Dichte solchermaßen erhaltener gesinterter Formteile hängt dabei wesentlich von der im ersten Pressschritt erzielten Dichte des Grünkörpers, der so genannten Gründichte (auch Pressdichte genannt) ab. Daher ist es erstrebenswert, bereits nach dem ersten Pressschritt Grünkörper vorliegen zu haben, welche eine möglichst hohe Dichte aufweisen. Darüber hinaus wird die Dichte eines Formteiles insbesondere auch durch das dem Sintern nachfolgende Kalibrieren beeinflusst beziehungsweise hierdurch weiter erhöht. Weiterhin dient das Kalibrieren zur Verbesserung der für das Bauteil gegebenenfalls benötigten Formgenauigkeit.

Die üblicherweise im Stand der Technik angewendeten hohen Pressdrücke zur Herstellung von Grünkörpern mit einer hohen Dichte haben jedoch einerseits einen hohen Verschleiß des Presswerkzeuges selbst zur Folge, und führen andererseits auch zu einer erhöhten Ausstoßgleitreibung des fertigen Grünköpers in der Pressmatrize. Hierdurch sind höhere Ausstoßkräfte mit entsprechend höherem Verschleiß auf das Presswerkzeug aufzubringen. Darüber hinaus bergen hohe Ausstoßkräfte die Gefahr einer unerwünschten lokalen Nachverdichtung und Rissbildung des Grünkörpers in sich. Grundsätzlich ist es daher bekannt, zur insbesondere Verminderung der Ausstoßkräfte das Presswerkzeug auf seiner Oberfläche mit einem Schmiermittel zu versehen und/oder ein entsprechendes Schmiermittel gleich der eingesetzten Pulvermischung zuzusetzen.

So ist aus der DE 102 44 486 A1 ein einer sinterbaren Pulvermischung beizugebendes Presshilfsmittel bekannt, welches 20 Gew.-% bis 60 Gew.-%, bezogen auf die Gesamtmenge des Presshilfsmittels, eines Polyglykols, und 40 Gew.-% bis 75 Gew.-%, bezogen auf die Gesamtmenge des Presshilfsmittels, eines Montanwachses umfasst.

Darüber hinaus werden auch bei der Kalibrierung Schmiermittel eingesetzt, um einerseits die Ausstoßkräfte aus dem Kalibrierwerkzeug zu reduzieren und so den Verschleiß des Kalibrierwerkzeuges zu vermindern, andererseits die Dichte im Formteil, insbesondere in oberflächennahen Bereichen, zu erhöhen. Üblicherweise werden Kalibrierschmiermittel auf Mineralölbasis eingesetzt.

Wesentliche Nachteile der gegenwärtig eingesetzten Schmiermittel, seien es solche, die insbesondere in Metallpulvermischungen als Presshilfsmittel oder aber als Kalibrierschmiermittel eingesetzt werden, liegen vor allem im Bereich des Arbeitsschutzes und der Umweltverträglichkeit. Durch den hohen Anteil insbesondere an Mineralöl in Kalibrierschmiermitteln beziehungsweise Stearaten wie Lithium- oder Zinkstearat, aber auch sonstigen ölähnlichen Substanzen in Presshilfsmitteln, weisen diese hautreizende oder allergene Eigenschaften auf. Zudem können in Hinblick auf verschärfte gesetzliche Anforderungen einige der bisher eingesetzten Mittel nicht länger verwendet werden.

US 4,765,950 offenbart ein Verfahren zur Herstellung gesinterter Teile aus pulverförmigen Materialien unter Einsatz eines Bindemittels, welches eine niedrig schmelzendere Komponente und eine höher schmelzendere Komponente aufweist, wobei die niedrig schmelzendere Komponente im flüssigen Zustand verbleibt, und beispielsweise eine Mischung aus einem pflanzlichen Öl und Wachs sein kann.

US 4,002,474 offenbart diskrete, unter Einsatz von Druck platzende Mikrokapseln, einsetzbar zur Schmierung in der Pulvermetallurgie, umfassend eine Füllung aus einem organischen flüssigen Lösemittel und einer dünnen Hülle aus nicht abbaubarem polymeren Material.

WO 2008/028589 A1 offenbart eine Mischung zur Herstellung sinterbarer Formteile, umfassend mindestens ein metallisches Material und/oder Kunststoffmaterial und mindestens ein Presshilfsmittel, wobei das Presshilfsmittel etwa 0,5 Gew.-% bis etwa 60 Gew.-%, bezogen auf die Gesamtmenge des Presshilfsmittel, mindestens eines Amides, und etwa 40 Gew.-% bis etwa 99,5 Gew.-%, bezogen auf die Gesamtmenge des Presshilfsmittels, mindestens eines Carnaubawachses umfasst.

Es ist daher Aufgabe der vorliegenden Erfindung, ein Schmiermittel als auch eine sinterfähige Pulvermischung zur Herstellung von gesinterten Formteilen zur Verfügung zu stellen, welche ähnliche Schmiereigenschaften wie die gegenwärtig aus dem Stand der Technik bekannten Schmiermitteln und dabei möglichst eine bessere Umweltverträglichkeit aufweisen.

Diese Aufgabe wird gelöst durch ein Schmiermittel für die Pulvermetallurgie, umfassend Carnaubawachs und mindestens ein bei einer Temperatur von 20 °C festes Fett auf pflanzlicher oder tierischer Basis. Carnaubawachs im Sinne der vorliegenden Erfindung ist ein Pflanzenwachs, welches üblicherweise eine Dichte in einem Bereich von 0,990 g/qcm bis 0,999 g/qcm und einen Schmelzpunkt insbesondere in einem Bereich von etwa 83 °C bis etwa 86 °C aufweist. Carnaubawachs wird insbesondere aus den Blättern der brasilianischen Fächerpalme Copernicia prunifera (Carnaubapalme) gewonnen. Beispielhaftes Carnaubawachs enthält etwa 85 Gew.-% Ester von Wachssäuren, w-Hydroxycarbonsäuren beziehungsweise Zimtsäuren mit Wachsalkoholen und Diolen. Darüber hinaus enthält Carnaubawachs auch etwa 3 Gew.-% bis etwa 5 Gew.-% freie Wachssäuren, insbesondere Carnauba- und Cerotinsäure, des Weiteren Alkohole und Diole, Kohlenwasserstoffe und Mineralstoffe. Es können auch Mischungen unterschiedlicher Carnaubawachse eingesetzt werden. Bevorzugt weisen die Carnaubawachse im Sinne der vorliegenden Erfindung eine Jod-Zahl in einem Bereich von etwa 8,5 bis etwa 10,5 auf, des Weiteren liegt die Säurezahl der Carnaubawachse im Sinne der vorliegenden Erfindung bevorzugt in einem Bereich von etwa 1 bis etwa 4, und des Weiteren die Verseifungszahl in einem Bereich von etwa 70 bis etwa 83.

Fette auf pflanzlicher oder tierischer Basis im Sinne der vorliegenden Erfindung sind Triglyceride. Dabei ist synonym zu dem in der vorliegenden Erfindung verwendeten Begriff Fett der Begriff Öl, so dass auch umfassend von der Gruppe der Fette und Öle gesprochen werden kann. Diese Fette und Öle bestehen im Wesentlichen aus gemischten Glycerinestern höherer Fettsäuren mit gerader Anzahl von Kohlenstoffatomen, wobei tierische Fette auch Fettsäuren mit ungerader Kohlenstoffzahl aufweisen können. Vorzugsweise wird im Sinne der vorliegenden Erfindung das Fett ausgewählt aus einer Gruppe umfassend pflanzliche Fette, weiter bevorzugt genau ein pflanzliches Fett beziehungsweise eine Mischung zweier pflanzlicher Fette, auch getrennt vorgelegt. Weiter bevorzugt umfasst das von dem erfindungsgemäßen Schmiermittel umfasste Fett mindestens etwa 6 Gew.-% Ölsäure, bevorzugt mindestens etwa 10 Gew.-% Ölsäure, bevorzugt liegt die Ölsäure in einer Menge in einem Bereich von etwa 6 Gew.-% bis etwa 65 Gew.-%, jeweils bezogen auf die Gesamtmenge des Fettes, vor. Das vom erfindungsgemäßen Schmiermittel umfasste Fett weist vorzugsweise eine Jodzahl von mindestens etwa 40, bevorzugt mindestens etwa 80 auf. In einer weiter bevorzugten Ausführungsform weist das mindestens eine Fett des erfindungsgemäßen Schmiermittels eine Verseifungszahl von mindestens etwa 150 mg, bevorzugt mindestens etwa 200 mg KOH/g auf.

Das erfindungsgemäße Schmiermittel für die Pulvermetallurgie wird vorzugsweise zur Herstellung von gesinterten Formteilen hergestellt. Als sinterbare Formteile im Sinne der vorliegenden Erfindung werden Formteile verstanden, welche vollständig aus einem sinterfähigen Material hergestellt wurden, andererseits werden hierunter auch Verbundteile verstanden, wobei der Grundkörper eines derartigen Verbundteils beispielsweise aus einer aluminium- oder eisenhaltigen Mischung hergestellt sein kann, und der mit dem Grundkörper weiter verbundene Körper aus einem weiteren Material, beispielsweise Gussstahl, gesintert oder massiv, oder aus massivem Aluguss hergestellt sein kann. Umgekehrt kann das Verbundteil auch beispielsweise lediglich auf den Stirnseiten oder seiner Oberfläche eine gesinterte Schicht aus einer beispielsweise aluminium- oder keramikhaltigen Mischung aufweisen, wohingegen der Grundkörper aus beispielsweise Stahl oder Gusseisen, gesintert oder massiv, hergestellt ist. Die gesinterten Formteile können dabei vorzugsweise unter Einsatz des erfindungsgemäßen Schmiermittels kalibriert und/oder des Weiteren in der Wärme ausgehärtet sein.

Die sinterbaren Formteile sind vorzugsweise aus einer Mischung, umfassend mindestens ein metallisches Material und/oder Kunststoffmaterial, als auch mindestens ein erfindungsgemäßes Schmiermittel für die Pulvermetallurgie, hergestellt. Sinterfähige metallische und/oder Kunststoffmaterialen im Sinne der vorliegenden Erfindung sind insbesondere Pulver beziehungsweise Pulvermischungen aus metallischen, keramischen und/oder Kunststoffbestandteilen beispielsweise aus niedrig legierten Stählen, Chrom-Nickel-Stählen, Bronzen, Nickelbasislegierungen wie Hastalloy, Inconel, Metalloxiden, Metallnitriden, Metallsiliziden oder dergleichen, weiterhin aluminiumhaltige Pulver beziehungsweise Mischungen, wobei die Mischungen auch hochschmelzende Bestandteile enthalten können wie beispielsweise Platin oder dergleichen. Die eingesetzten Pulver und deren Teilchengrößen sind vom jeweiligen Einsatzzweck abhängig. Beispielhafte eisenhaltige Pulver sind die Legierungen 316L, 304L, Inconel600, Inconel625, Monel und HastalloyB, X und C als auch 17-4PH. Besonders bevorzugt sind niedrig legierte Stahlpulver wie Eisen-Kohlenstoff-Stähle, Distaloy AB, AE, DE und HP (Höganäs AB, Schweden) und Ancorsteel 4300 (Hoeganaes Corp., USA). Auch Titan und/oder Titanlegierungen sind Materialien geeignet, auch in Mischung mit anderen Materialien, insbesondere eisenhaltigen Pulvern. Weiterhin kann das metallische Material und/oder Kunststoffmaterial ganz oder teilweise aus Kunststofffasern beziehungsweise Fasern sein, vorzugsweise Fasern mit Durchmessern zwischen etwa 0,1 µm bis etwa 2 µm und einer Länge von wenigen Mikrometern bis hin zu etwa 50 Millimetern. Zusätzlich können den metallischen Materialen und/oder Kunststoffmaterialien auch insbesondere noch Kohlenstoff zur Bildung gewünschter Legierungen in entsprechender Menge zugesetzt werden, sowie sonstige Additive wie beispielsweise Bindemittel oder Ähnliches. Des Weiteren kann die sinterfähige Mischung auch mindestens ein Stabilisierungsmittel und/oder mindestens ein Antiagglomerationsmittel umfassen. Weiterhin kann die sinterfähige Mischung auch selbstschmierende Mittel umfassen, neben Graphit beispielsweise alternativ oder zusätzlich MoS₂, WS₂, BN und/oder andere Kohlenstoffmodifikationen wie Koks, polarisierter Graphit oder Ähnliches. Des Weiteren kann die sinterfähige Mischung auch Aerosile sowie sonstige, dem Fachmann bekannte Zusätze, je nach Anwendungszweck ausgewählt, umfassen.

Das erfindungsgemäße Schmiermittel weist den großen Vorteil auf, dass mit diesem einerseits Verpressbarkeiten von sinterfähigen Materialien beziehungsweise Materialmischungen erhalten werden, die denjenigen üblicher aus dem Stand der Technik bekannter Presshilfsmittel entspricht, wobei das Schmiermittel für die Pulvermetallurgie dabei vorzugsweise dem sinterfähigen Material beziehungsweise der sinterfähigen Materialmischung, insbesondere in Form eines Pulvers beziehungsweise Pulvermischung, zugesetzt ist in hinreichender Menge. Des Weiteren kann das erfindungsgemäße Schmiermittel als Kalibrierschmiermittel eingesetzt werden, wobei hiermit insbesondere hohe Kräfte bei einem einseitigen Kalibrieren am Unterstempel beispielsweise mittels Wägezellen erzielt werden können, und darüber hinaus die Ausstoßkräfte so gering sind, wie dies bei aus dem Stand der Technik bekannten, jedoch aus Umweltsicht nachteiligen Kalibrierschmiermitteln bekannt ist.

In einer bevorzugten Ausführungsform ist das mindestens eine vom Schmiermittel umfasste Fett fest oder flüssig. Dabei beziehen sich die vorgenannten Aggregatzustände auf eine Temperatur von 20°C, wobei je nach Zusammensetzung und Viskosität auch ein bspw. bei 5°C schmelzendes Fett eher als festes Fett im Sinne der vorliegenden Erfindung angesprochen werden kann. Weiter bevorzugt ist das mindestens eine Fett ein Triglycerid, welches einen Glycerinester mit überwiegend gesättigten Fettsäuren darstellt, das heißt dass der Glycerinester mindestens mit zwei gesättigten Fettsäuren gebildet ist. Erfindungsgemäß umfasst das Schmiermittel neben Carnaubawachs mindestens ein bei einer Temperatur von 20 °C festes Fett. In einer bevorzugten Ausführungsform umfasst das erfindungsgemäße Schmiermittel neben Carnaubawachs mindestens ein bei einer Temperatur von 20 °C festes Fett und mindestens ein bei einer Temperatur von 20 °C flüssiges Fett.

Weiter bevorzugt ist das mindestens eine Fett des erfindungsgemäßen Schmiermittels für die Pulvermetallurgie ausgewählt aus einer Gruppe umfassend Rapsöl, Kokosfett, Sojaöl, Leinöl, Palmöl beziehungsweise -fett, Sonnenblumenöl, Walnussöl, Haselnussöl, Olivenöl, Rizinusöl, Talg und/oder Tran und Derivate der vorgenannte Substanzen. Als Derivate kommen insbesondere hydrierte oder oxydierte Verbindungen der vorgenannten Substanzen in Betracht. Besonders bevorzugt ist das mindestens eine Fett des erfindungsgemäßen Schmiermittels ausgewählt aus einer Gruppe umfassend Rapsöl, Kokosfett, Sojaöl, Palmöl und/oder Sonnenblumenöl. Es versteht sich dabei von selbst, dass Mischungen der genannten Substanzen eingesetzt werden können.

In einer weiter bevorzugten Ausführungsform der vorliegenden Erfindung umfasst das erfindungsgemäße Schmiermittel mindestens 50 Gew.-% Carnaubawachs und mindestens 10 Gew.-% eines bei einer Temperatur von 20 °C festen pflanzlichen Fettes, wobei die Gewichtsprozente jeweils bezogen sind auf die Gesamtmenge des Schmiermittels.

Weiter bevorzugt umfasst das Schmiermittel Carnaubawachs in einer Menge von 65 Gew.-% bis 90 Gew.-% und das mindestens eine feste pflanzliche Fett in einer Menge von 10 Gew.-% bis etwa 35 Gew.-%, jeweils bezogen auf die Gesamtmenge des erfindungsgemäßen Schmiermittels. Weiter bevorzugt umfasst das Schmiermittel neben Carnaubawachs und dem mindestens einen festen pflanzlichen Fett keine weiteren Substanzen.

In einer weiter bevorzugten Ausführungsform umfasst das erfindungsgemäße Schmiermittel mindestens etwa 5 Gew.-% Carnaubawachs, mindestens etwa 20 Gew.-% eines bei einer Temperatur von 20°C ersten, insbesondere eher festen pflanzlichen Fettes und mindestens etwa 40 Gew.-% eines bei einer Temperatur von 20°C flüssigen zweiten pflanzlichen Fettes, wobei die Gewichtsprozente jeweils bezogen sind auf die Gesamtmenge des Schmiermittels. Weiter bevorzugt umfasst in dieser Ausführungsform das erfindungsgemäße Schmiermittel Carnaubawachs in einer Menge von etwa 6 Gew.-% bis etwa 15 Gew.-%, das mindestens eine erste pflanzliche Fett in einer Menge von etwa 30 Gew.-% bis etwa 45 Gew.-% und das mindestens eine pflanzliche flüssige Fett in einer Menge von etwa 45 Gew.-% bis etwa 65 Gew.-%. Vorzugsweise umfasst das erfindungsgemäße Schmiermittel nach dieser Ausführungsform neben einem zweiten flüssigen pflanzlichen Fett und einem ersten pflanzlichen Fett und Carnaubawachs keine weitere Substanz. Das erfindungsgemäße Schmiermittel nach dieser Ausführungsform ist insbesondere geeignet zum Einsatz als Kalibrierschmiermittel, wobei besonders bevorzugt bei Einsatz desselben bei der Kalibrierung kein Trockenschritt vorgesehen sein muss, wie dies ansonsten bei den aus dem Stand der Technik bekannten lösemittelhaltigen Kalibrierschmiermitteln der Fall ist. Das weiter vorstehend definierte erfindungsgemäße Schmiermittel mit einem höheren Anteil an Carnaubawachs hingegen wird vorzugsweise als Presshilfsmittel, weiter bevorzugt unmittelbar in einer Pulvermischung eingemischt, eingesetzt.

Soweit in der vorliegenden Erfindung Bereiche oder Zahlenbereiche angegeben werden, ist darauf hinzuweisen, dass es sich bei diesen und insbesondere bei oberen und unteren Bereichsgrenzen nicht um absolute Werte handelt, ist es vielmehr für den angesprochenen Fachmann ersichtlich, dass der Erfolg der vorliegenden Erfindung auch bei Abweichungen von den zahlenmäßig definierten Ober- oder Untergrenzen beziehungsweise angegebenen Zahlenwerten noch erreicht werden kann. Dabei kann der abweichende Bereich um bis zu 5 % von den angegebenen Zahlenwerten beziehungsweise Ober- und/oder Untergrenzen differieren.

Die vorliegende Erfindung betrifft weiterhin die Verwendung eines erfindungsgemäßen Schmiermittels wie vorstehend definiert als Zusatz zu einer sinterfähigen Pulvermischung, das heißt als Presshilfsmittel, oder als Kalibrierschmiermittel in der Pulvermetallurgie.

Schließlich betrifft die vorliegende Erfindung auch eine Mischung zur Herstellung von gesinterten Formteilen, umfassend mindestens ein metallisches Material und/oder Kunststoffmaterial und mindestens ein Schmiermittel für die Pulvermetallurgie, wie vorstehend definiert. Vorzugsweise wird dabei eine sinterfähige Pulvermischung eingesetzt, welche weiter bevorzugt mindestens ein Kunststoff- und/oder metallisches Pulvermaterial neben dem mindestens einen Schmiermittel umfasst. Die erfindungsgemäße Mischung zur Herstellung von gesinterten Formteilen umfasst dabei vorzugsweise 0,1 Gew.-% bis 2 Gew.-%, bezogen auf die Gesamtmenge der sinterfähigen Pulvermischung, des erfindungsgemäßen Schmiermittels. Weiterhin kann die sinterfähige Pulvermischung neben den oben genannten metallischen und/oder Kunststoffmaterialien, auch in Form von Mischungen, weitere Zusatzmittel wie Aerosile, Graphit, selbstschmierende Materialien, Bindemittel et cetera umfassen.

Die Vorteile der vorliegenden Erfindung werden anhand der folgenden Beispiele näher erläutert.

Zunächst sei darauf hingewiesen, dass die Erfindung nicht auf die in den Beispielen definierten erfindungsgemäßen Schmiermittel beziehungsweise sinterfähigen Mischungen beschränkt ist. Vielmehr sind die jeweils in der allgemeinen Beschreibung offenbarten Merkmale mit denjenigen in den Beispielen angegebenen Merkmalen kombinierbar.

### Presshilfsmittel

Ein erfindungsgemäßes Schmiermittel, welches als Presshilfsmittel eingesetzt wird, wird zur Verfügung gestellt durch eine Mischung aus 16,7 Gew.-% Kokosfett und 83,3 Gew.-% Carnaubawachs. Das Kokosfett war ein bei einer Temperatur von 20 °C noch festes Fett mit einer Verseifungszahl von 255 mg KOH/g bis 260 mg KOH/g. Es wurde bezogen unter dem Produktnamen Palmin von der Firma Peter Kölln KGaA, Elmshorn, Deutschland. Das eingesetzte Carnaubawachs wurde unter der Typenbezeichnung 7170 von der Firma Willy Benecke GmbH, Hamburg, bezogen, und weist einen Schmelzbereich von 78 °C bis 90 °C und eine Säurezahl von 2 bis 10 sowie eine Esterzahl von 70 bis 82 auf. Es lag in Pulverform vor. Das in Blockform vorliegende Kokosfett und das in Pulverform vorliegende Carnaubawachs kann zur Herstellung des erfindungsgemäßen Schmiermittels in den angegebenen Mengen zusammen verschmolzen, aber auch lediglich zusammen vermischt werden (nach Umformung des Kokosfettes in Pulver- oder Pelletform). Wird das Schmiermittel durch Zusammenschmelzen der Bestandteile allgemein hergestellt, kann die erhaltene und abgekühlte Schmelze nachfolgend gemahlen oder verdüst werden. Das solchermaßen hergestellte erfindungsgemäße Schmiermittel, als Presshilfsmittel einsetzbar, lag bei einer Temperatur von 20 °C als festes Pulver vor.

Das solchermaßen hergestellte erfindungsgemäße Schmiermittel wurde als Presshilfsmittel einem sinterfähigen metallischen Pulvermaterial zugesetzt. Dabei wurde ein wasserverdüstes Eisenpulver mit der Produktbezeichnung 1000BMn der Firma Hoeganaes Corporation, Cinnaminson, USA, eingesetzt, welchem zusätzlich zwei Gew.-% Kupfer in Pulverform als auch 0,6 Gew.-% Graphit mit der Handelsbezeichnung UF-4 der Firma Graphit Kropfmühl AG, Hauzenberg, Deutschland, zugesetzt war. Dieser Pulvermischung wurden 0,6 Gew.-% des erfindungsgemäßen Schmiermittels als Presshilfsmittel zugesetzt und die Mischung homogen vermischt. Diese wies 96,8 Gew.-% des wasserverdüsten Eisenpulvers 1000BMn auf. Die solchermaßen hergestellte sinterfähige Pulvermischung wurde in ein übliches Presswerkzeug gefüllt und bei unterschiedlichen Drücken und einer Matrizentemperatur von 25 °C als auch einem M/Q-Verhältnis von 10 (Mantelfläche zu Querschnitt-Verhältnis) zu Buchsen mit einem Außendurchmesser von 14,3 mm, einem Innendurchmesser von 9 mm und einer Höhe von 13,3 mm uniaxial gepresst.

Zum Vergleich wurde ein sinterfähige Pulvermischung mit der vorstehend genannten Zusammensetzung hergestellt, wobei dieser jedoch anstatt 0,6 Gew.-% des erfindungsgemäßen Schmiermittels, als Presshilfsmittel eingesetzt, das aus dem Stand der Technik bekannte Presshilfsmittel Licowax C der Firma Clariant GmbH, Frankfurt am Main, Deutschland, in einer Menge von 0,6 Gew.-% eingesetzt wurde, welches ein Bisstearoylethylendiamin (Amidwachs) ist.

Es wurden bei unterschiedlichen Pressdrücken die Dichte der hergestellten Grünkörper sowohl der erfindungsgemäßen Pulvermischung als auch der Vergleichsmischung in Übereinstimmung mit DIN ISO 3369 (undurchlässige Sintermetalle und Hartmetalle/Ermittlungen der Dichte) ermittelt. Die Dichte wurde dabei bei Pressdrücken von 400 MPa, 500 MPa und 600 MPa ermittelt.

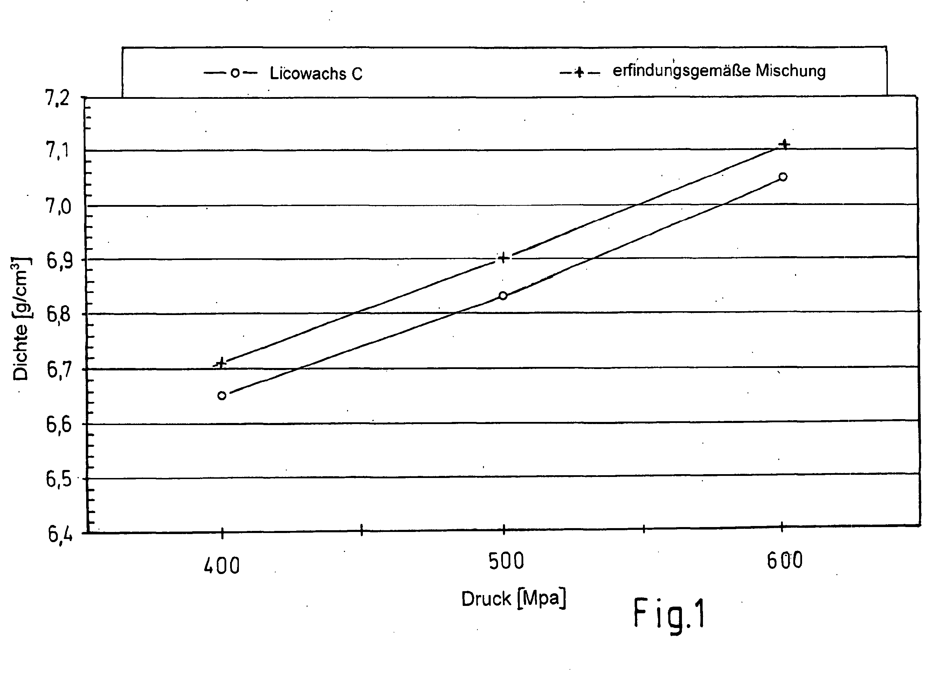

Die gemessenen Abhängigkeiten sind Fig. 1 zu entnehmen. Fig. 1 zeigt, dass das erfindungsgemäße Schmiermittel, als Presshilfsmittel eingesetzt, höhere Dichten bei den hergestellten buchsenförmigen Grünkörpern aufweist als diejenigen, welche unter Einsatz des aus dem Stand der Technik bekannten und erprobten Schmiermittels Licowachs C erzielt worden sind. Im Unterschied zu Licowachs C ist jedoch das erfindungsgemäße Schmiermittel umweltverträglich und kostengünstig.

### Kalibrierschmiermittel

Des Weiteren wurde ein erfindungsgemäßes Schmiermittel hergestellt aus 54 Gew.-% Rapsöl (zweites pflanzliches und flüssiges Fett), 36 Gew.-% eines ersten Pflanzenfettes und 10 Gew.-% Carnaubawachs. Das hier eingesetzte Carnaubawachs entsprach demjenigen, welches in dem erfindungsgemäßen Schmiermittel, als Presshilfsmittel eingesetzt, weiter oben beschrieben ist. Das Rapsöl wies einen Schmelzpunkt von -5 °C auf und ist damit als flüssiges Fett im Sinne der vorliegenden Anmeldung anzusprechen. Die Verseifungszahl betrug 375 mg KOH/g, die Jodzahl 107, die Viskosität, gemessen bei 35°C und dynamisch gemessen, betrug 39 mPa · s (gemessen gemäß DIN 53015). Das eingesetzte erste Pflanzenfett wies einen Schmelzpunkt von +3 °C und eine Viskosität bei 35°C und dynamisch gemessen von 78 mPa · s (gemessen gemäß DIN 53015) auf und war daher im Sinne der vorliegenden Erfindung als eher festes Fett anzusprechen. Des Weiteren wies das erste Fett eine Verseifungszahl von 380 mg KOH/g und eine Jodzahl von 92 mg KOH/g auf. Der Anteil an Ölsäure in dem ersten Fett betrug etwa 52 Gew.-%, wohingegen das eingesetzte Rapsöl Ölsäure in einer Menge von etwa 59 Gew.-% aufwies. Die einzelnen Bestandteile des erfindungsgemäßen Schmiermittels, einsetzbar als Kalibrierschmiermittel, wurden bei erhöhter Temperatur von etwa 80°C vermischt. Es lag in flüssiger Form vor.

Unter Einsatz des solchermaßen hergestellten erfindungsgemäßen Kalibrierschmiermittels wurden Buchsen mit einem Innendurchmesser 9 mm, einem Außendurchmesser von 14,3 mm und einer Höhe von 25 mm hergestellt aus wasserverdüstem Eisenpulver mit dem Handelsnamen ASC100.29 der Firma Hoeganaes AB, Schweden. Das genannte Eisenpulver wurde zusammen mit 0,6 Gew.% Licowachs C zu den genannten Bauteilen verpresst. Das MQ-Verhäitnis betrug 19. Die so erhaltenen Grünteile wurden bei 1120°C ca. 20 Min. in einem kontinuierlichen Bandofen gesintert. Nach dem Herstellungsschritt des Sintern und Abkühlen auf Raumtemperatur wurden die solchermaßen erhaltenen Buchsen bei 20°C in das erfindungsgemäße Kalibrierschmiermittel getaucht.

Zum Vergleich zu aus dem Stand der Technik bekannten Kalibrierschmiermitteln wurden nachfolgend dem Tauchvorgang und gegebenenfalls einer Trocknung, welche bei dem erfindungsgemäßen Kalibrierschmiermittel jedoch im Unterschied zu denjenigen aus dem Stand der Technik bekannten nicht notwendig ist, die mit dem Schmiermittel überzogenen Buchsen in ein entsprechendes Kalibrierwerkzeug gelegt und einseitig mit einem Oberstempel mit einer Kraft von 800 MPa eine Kalibrierung vorgenommen. Dabei wurden die bei der Kalibrierung mit dem Oberstempel resultierenden Kräfte mittels Wägezellen der Firma Hottinger Baldwin, Darmstadt, Deutschland gemessen. Dabei wurden zunächst die Kräfte am Unterstempel gemessen. Nachfolgend der Kalibrierung wurden die Proben dann mit dem Unterstempel des Kalibrierwerkzeuges aus diesem ausgestoßen, und dabei ebenfalls die benötigten Kräfte ermittelt. Während die am Unterstempel während des Kalibrierens gemessenen Kräfte möglichst hoch sein sollten, sollten die beim Ausstoß aus dem Werkzeug gemessenen Kräfte möglichst gering sein.

Die wie vorstehend hergestellte erfindungsgemäße Schmiermittelmischung, als Kalibrierschmiermittel einsetzbar, wurde dabei verglichen mit dem Schmiermittel Multical EJ10 der Firma Zeller+Gmelin GmbH & Co. KG, Eislingen/Fils, Deutschland, welches zwischenzeitlich vom Markt genommen wurde, und ein lösmittelhaltiges Wachs darstellt, als auch dem als Kalibrierschmiermittel eingesetzten Rustilo DWX 30 der Firma Castrol Industrie GmbH, Mönchengladbach, Deutschland, welches ein lösemittelhaltiges Fett darstellt.

In der nachfolgenden Tabelle 1 sind die gemessenen Kräfte als auch die Herstellungsbedingungen gegenübergestellt.

**Tabelle 1**

| Hersteller | Basis | Produkt | Trockenzeit [min] | Trocknen bei [°C] | Werkzeugtemperatur (°C) | P_{UnterStempel} [MPa] | P_{US-sus} [MPa] |
|---|---|---|---|---|---|---|---|
| Zeller+Gmelin GmbH & Co. KG | Wachs lösemittelhaltig | Multical EJ 10 | 720 | 25 | 25 | 579 | 165 |
| Castrol Industrie GmbH | Fett, lösemittelhaltig | Rustilo DWX 30 | 300 | 25 | 25 | 215 | 515 |
| Vorliegende Erfindung | Carnaubawachs, Rapsöl, halbfestes Pflanzenfett, lösemittelfrei | Vorliegende Erfindung | 0 | 25 | 25 | 490 | 185 |

Wie der vorstehenden Tabelle gut entnommen werden kann, zeigt das erfindungsgemäße Schmiermittel, als Kalibrierschmiermittel eingesetzt, sowohl betreffend die am Unterstempel gemessenen Kräfte als auch die gemessenen Ausstoßkräfte Werte, welche zwischen denjenigen der aus dem Stand der Technik bekannten Kalibrierschmiermitteln liegen, und zwar in Bereichen, welche für die praktische Anwendung relevant sind. Vorteilhafterweise ist das erfindungsgemäß eingesetzte Kalibrierschmiermittel ausgesprochen umweltverträglich und auch unter Gesichtspunkten des Arbeitsschutzes unbedenklich.

## Patentansprüche

1. Schmiermittel für die Pulvermetallurgie, umfassend Carnaubawachs und mindestens ein bei einer Temperatur von 20 °C festes Fett auf pflanzlicher oder tierischer Basis.

2. Schmiermittel gemäß Anspruch 1, **dadurch gekennzeichnet, dass** das Fett ein pflanzliches, Fett ist.

3. Schmiermittel gemäß einem der vorhergehenden Ansprüche, **dadurch gekennzeichnet, dass** das mindestens eine Fett mindestens 6 Gew.-% Ölsäure umfasst.

4. Schmiermittel gemäß einem der vorhergehenden Ansprüche, **dadurch gekennzeichnet, dass** das Fett eine Jodzahl von mindestens 40 aufweist.

5. Schmiermittel gemäß einem der vorhergehenden Ansprüche, **dadurch gekennzeichnet, dass** dieses eine Verseifungszahl von mindestens 150 mg KOH/g aufweist.

6. Schmiermittel gemäß einem der vorhergehenden Ansprüche, **dadurch gekennzeichnet, dass** dieses mindestens ein bei einer Temperatur von 20 °C festes Fett und mindestens ein bei einer Temperatur von 20 °C flüssiges Fett umfasst.

7. Schmiermittel gemäß einem der vorhergehenden Ansprüche, **dadurch gekennzeichnet, dass** das mindestens eine Fett ausgewählt ist aus einer Gruppe bestehend aus Rapsöl, Kokosfett, Sojaöl, Leinöl, Palmöl beziehungsweise -fett, Sonnenblumenöl, Walnussöl, Haselnussöl, Olivenöl, Rizinusöl, Talg und/oder Tran und Derivate der vorgenannten Substanzen.

8. Schmiermittel gemäß einem der vorhergehenden Ansprüche, umfassend mindestens 50 Gew.-% Carnaubawachs und mindestens 10 Gew.-% eines bei einer Temperatur von 20 °C festen pflanzlichen Fettes, wobei die Gewichtsprozente jeweils bezogen sind auf die Gesamtmenge des Schmiermittels.

9. Schmiermittel gemäß einem der Ansprüche 1 bis 7, **dadurch gekennzeichnet, dass** dieses mindestens 5 Gew.-% Carnaubawachs, mindestens 20 Gew.-% eines ersten pflanzlichen Fettes und mindestens 40 Gew.-% eines zweiten pflanzlichen und bei einer Temperatur von 20 °C flüssigen Fettes, umfasst, wobei die Gewichtsprozente jeweils bezogen sind auf die Gesamtmenge des Schmiermittels.

10. Verwendung eines Schmiermittels gemäß einem der Ansprüche 1 bis 9 als Zusatz zu einer sinterfähigen Pulvermischung oder als Kalibrierschmiermittel in der Pulvermetallurgie.

11. Mischung zur Herstellung von gesinterten Formteilen, umfassend mindestens ein Schmiermittel gemäß einem der Ansprüche 1 bis 9 und mindestens ein metallisches Material und/oder Kunststoffmaterial.

12. Mischung gemäß Anspruch 11, **dadurch gekennzeichnet, dass** diese 0,1 Gew.-% bis 2,0 Gew.-%, bezogen auf die Gesamtmenge der Mischung, Schmiermittel umfasst.

## Claims

1. Lubricant for powder metallurgy, comprising carnauba wax and at least one fat with a vegetable or animal base which is solid at a temperature of 20°C.

2. Lubricant as claimed in claim 1, **characterised in that** the fat is a vegetable fat.

3. Lubricant as claimed in one of the preceding claims, **characterised in that** the at least one fat contains at least 6% by weight of oleic acid.

4. Lubricant as claimed in one of the preceding claims, **characterised in that** the fat has an iodine value of at least 40.

5. Lubricant as claimed in one of the preceding claims, **characterised in that** it has a saponification number of at least 150 mg KOH/g.

6. Lubricant as claimed in one of the preceding claims, **characterised in that** it comprises at least one fat which is solid at a temperature of 20°C and at least one fat that is liquid at a temperature of 20°C.

7. Lubricant as claimed in one of the preceding claims, **characterised in that** the at least one fat is selected from a group comprising rapeseed oil, coconut fat, soya oil, linseed oil, palm oil or fat, sunflower oil, walnut oil, hazelnut oil, olive oil, castor oil, tallow and/or fish oil and derivatives of the aforementioned substances.

8. Lubricant as claimed in one of the preceding claims, comprising at least 50% by weight of carnauba wax and at least 10% by weight of a vegetable fat that is solid at a temperature of 20°C, the percentages by weight respectively being based on the total quantity of lubricant.

9. Lubricant as claimed in one of claims 1 to 7, **characterised in that** it comprises at least 5% by weight of carnauba wax, at least 20% by weight of a first vegetable fat and at least 40% by weight of a second vegetable fat that is liquid at a temperature of 20°C, the percentages by weight respectively being based on the total quantity of lubricant.

10. Use of a lubricant as claimed in one of claims 1 to 9 as an additive of a sinterable powder mixture or as a calibration lubricant in powder metallurgy.

11. Mixture for producing sintered components, comprising at least one lubricant as claimed in one of claims 1 to 9 and at least one metallic material and/or plastic material.

12. Mixture as claimed in claim 11, **characterised in that** it comprises 0.1% by weight to 2.0% by weight of lubricant relative to the total quantity of the mixture.

## Revendications

1. Lubrifiant pour la métallurgie des poudres, comprenant de la cire de carnauba et au moins une graisse à base végétale ou animale, solide à une température de 20°C.

2. Lubrifiant selon la revendication 1, **caractérisé en ce que** la graisse est une graisse végétale.

3. Lubrifiant selon l'une quelconque des revendications précédentes, **caractérisé en ce que** la au moins une graisse comprend au moins 6 % en poids d'acide oléique.

4. Lubrifiant selon l'une quelconque des revendications précédentes, **caractérisé en ce que** la graisse présente un indice d'iode d'au moins 40.

5. Lubrifiant selon l'une quelconque des revendications précédentes, **caractérisé en ce que** celui-ci présente un indice de saponification d'au moins 150 mg KOH/g.

6. Lubrifiant selon l'une quelconque des revendications précédentes, **caractérisé en ce que** celui-ci comprend au moins une graisse solide à une température de 20°C et au moins une graisse liquide à une température de 20°C.

7. Lubrifiant selon l'une quelconque des revendications précédentes, **caractérisé en ce que** la au moins une graisse est sélectionnée dans le groupe composé de l'huile de colza, la graisse de coco, l'huile de soja, l'huile de lin, l'huile ou la graisse de palme, l'huile de tournesol, l'huile de noix, l'huile de noisette, l'huile d'olive, l'huile de ricin, le suif et/ou l'huile de poisson et des dérivés des substances précitées.

8. Lubrifiant selon l'une quelconque des revendications précédentes, comprenant au moins 50 % en poids de cire de carnauba et au moins 10 % en poids d'une graisse végétale solide à une température de 20°C, dans lequel les pourcentages pondéraux sont chaque fois rapportés à la quantité totale du lubrifiant.

9. Lubrifiant selon l'une quelconque des revendications 1 à 7, **caractérisé en ce que** celui-ci comprend au moins 5 % en poids de cire de carnauba, au moins 20 % en poids d'une première graisse végétale et au moins 40 % en poids d'une deuxième graisse végétale et liquide à une température de 20°C, dans lequel les pourcentages pondéraux sont chaque fois rapportés à la quantité totale du lubrifiant.

10. Utilisation d'un lubrifiant selon l'une quelconque des revendications 1 à 9 comme additif à un mélange de poudre frittable ou comme lubrifiant de calibrage dans la métallurgie des poudres.

11. Mélange pour la fabrication de pièces moulées frittées, comprenant au moins un lubrifiant selon l'une quelconque des revendications 1 à 9 et au moins un matériau métallique et/ou un matériau plastique.

12. Mélange selon la revendication 11, **caractérisé en ce que** celui-ci comprend 0,1 % en poids à 2,0 % en poids de lubrifiant, rapportés à la quantité totale du mélange.
